# EUROPEAN PATENT SPECIFICATION

(11) **EP 0 517 297 B1**
(45) Date of publication and mention of the grant of the patent: **19.01.2000**
(21) Application number: 92201486.5
(22) Date of filing: 25.05.1992
(51) Int. Cl.: G06K 9/80, G06K 9/46, B07C 3/14, B07C 3/18

(54) **Processing system for the processing of items of mail**
Postverarbeitungssystem
Système de traitement de courrier

(30) Priority: 05.06.1991 NL 9100965
(43) Date of publication of application: 09.12.1992
(73) Proprietor: Koninklijke KPN N.V., 9726 AE Groningen (NL)
(72) Inventor: Essink, Henricus Petrus Martinus, W-2716 LX Zoetermeer (NL)

(56) References cited:
- DE-A- 2 144 697
- FR-A- 1 048 767
- FR-A- 2 134 878
- US-A- 4 776 464

## Description

### A. BACKGROUND OF THE INVENTION

The invention relates to a processing system for the processing, such as the routing, of items of mail, such as letters, postcards, postal packages and the like, which are provided with one or more control fields for the accommodation therein of optical control designations destined for the processing in the processing system, such as the destination address or an essential part thereof, such as the combination of the postcode and house number, the characters of which control designations are applied to said item of mail in a colour which lies within a certain optical wavelength range, said items comprising optical marking means for marking the geometrical position of said control fields on said items, which marking means are applied to said items in a colour lying within that same optical wavelength range and which marking means comprise one or more regions having a unique image structure which is characteristic of said marking means, the processing system comprising first detection means for detecting the geometrical position of the marking means and first computation means for computing, on the basis of the detected position of the marking means, the geometrical position of the control fields and supplying a parameter signal corresponding to the computed position, and second detection means for detecting, under the control of the parameter signal supplied by the first computation means, the control designations accommodated in the computed control fields, and second computation means for converting said control designations into control signals for controlling the processing system for the purpose of further processing the items of mail, both the first and the second detection means being sensitive to the optical wavelength range mentioned. Such a system is generally known.

In the processing procedure now current for items of mail (hereinafter also referred to as 'letters' (envelopes), 'mail' or 'mail items' for convenience), said 'optical control designations in a colour lying within a certain optical wavelength range', which are to be used for the routing (forwarding), are formed by a destination address written, typed or printed on the letter by the sender (in a colour which contrasts well with respect to the background). Although the destination address is applied in this connection inside a 'control field', such a field is on the whole not indicated on many letters; in practice, however, the destination address is usually applied somewhat to the right beneath the geometrical centre. On postcards, for example, the address field (control field) is more clearly indicated by means of a line marking.

The mail items presented for forwarding to the destination address are collected via letter boxes and post office counters. The actual routing of the mail collected in this way starts in a regional so-called sorting office (SO) making use of so-called indexing and sorting machines. In the SO a machine-readable (bar) code is printed on the mail items by means of an indexing machine. The machine-readable destination code is used in the subsequent routing process at those points where the routing is performed by machine. Specifically, that is the case in the mail sorting machines in which the mail items presented are sorted in accordance with their (main) destination, indicated by their postcode. After this sorting, the mail 'bundles' resulting therefrom are forwarded to their main destinations, where they undergo a further (manual) final-destination sorting and are ultimately delivered at their final destinations.

The index codes are now largely applied to the mail items with the aid of human (but very routine) labour, either the letter itself or a video picture of the letter being shown to an operator (seated behind a so-called indexing console) and said operator keys in the postcode of the destination address on a keyboard, after which the indexing console prints a bar code (which can later be read by the sorting machine) corresponding to the keyed-in postcode on the letter.

In order to make it possible to have the indexing performed by a machine (without intervention of human labour), it may be decided to standardise the position at which a postcode has to be placed on a mail item (in other words, the position of the control field for the postcode). It thereby becomes possible to program an automatic indexing machine in such a way that, at said standardised position on every mail item, the characters placed at that point are interpreted as a postcode. The (standardised) position of the postcode field (or other control field) must, however, actually be marked as an aid in filling in the postcode at the correct position. However, this marking is usually (for example, in the case of machine-processable payment instructions of banking institutions and the like) applied in a colour having little contrast with the surroundings, at any rate in a colour to which the read-out means are insensitive, such as 'process blue' or 'process red', in order not to confuse the read-out means and thereby reduce the result of the read-out process qualitatively.

NL9100300 in the name of the Applicant deals with measures which serve to enable the mail processing procedure to be transacted more flexibly and also more rapidly, namely by converting control information applied to the mail items as early as possible in the process into corresponding electronic information which is faster to process and can also be processed as required (for example, from outside the processing system), as a result of which, for example, a 'follow-me' option can be obtained for mail items. The conversion of postcodes and other control information into electronic information fits into the framework of those and similar developments relating to the mail processing procedure, namely as a result of automatically reading out said control information and converting it into control signals.

There are therefore actually two reasons for automating postcodes and the like, namely (in the shorter term) the acceleration of the indexing process and the replacement in the latter connection of very routine labour by machine capacity, the sorting process continuing to make use of the index codes applied to the mail items, and (in the longer term) the completely automatic conversion of all control codes which are of importance, such as those applied to the mail item, into electronic control signals. A development which forms the subject of NL9001534 in the name of the Applicant also fits into this last framework, in which development the message content of certain mail items (for example, order forms of a mail order company) is converted (under the control of control codes (not a postcode) applied to said mail item) into an electronic message; such control codes (conversion codes) have also to be capable of being read out in a completely automated manner.

Finally, it is pointed out that (for the Dutch situation) the combination of postcode with house number represents the complete destination address of a mail item. On the basis of said combination, the entire routing, from SO to final destination, can therefore in principle be mechanised or automated. For that reason it is therefore quite conceivable that, in subsequent developments of the postal routing process, the house number will also have to be automatically read out and converted, either into a (part of the) index code or into a (part of the) electronic control code signal.

### B. SUMMARY OF THE INVENTION

Although the control fields (for example, postcode, house number, conversion code) can be marked in colours which can in fact be detected by those who have to fill in said fields but not by the automatic read-out equipment, the present invention therefore provides (in order to avoid the need to standardise the geometrical position of the control fields) a processing system in which, to put it simply, the control field is indicated by a marking detectable both by a human being and by machine, the position of the control field thus being detected by machine in order subsequently to read out the contents of said control field and to convert them, for example, into bar codes or electronic control code signals.

The generally known system achieves the result that (since the marking lies in the same wavelength range as the characters to be filled in in the control field) said marking can be detected just like the characters by the read-out equipment; in other words, the read-out equipment, which is sensitive to the colour in which the characters have been applied in the control field, is also capable of detecting the marking which indicates the position of the control field and which is applied in the same 'colour range'. As a result of the unique characteristic image pattern of the marking, it can be distinguished from the rest of the image pattern of the mail item.

The fact that the marking is just as 'visible' to the equipment as the filled-in characters introduces a problem if the marking means are executed in the form of a frame around the control field. Specifically, if the control field is filled in with hand-written characters a part of such a character will sometimes project just outside the frame; this is often the case with, for example, the numerals '6' and '9'. Parts of a character may also coincide with the frame, for example the uppermost parts of the characters '5' or '7'. In those cases, the read-out equipment cannot distinguish between the character segments and the frame. According to a more specific development of the invention, the image information of the frame is preferably erased in the conversion process (in which the contents of the control field are interpreted and converted into electronic digital codes) before the characters are interpreted. Especially in the case where parts of characters coincide with parts of the frame, such a filtering-out of the frame would affect the quality of conversion.

The invention solves this problem by providing that the first detection means are suitable for detecting the geometrical position of marking means which are only formed by a frame which is executed essentially as a broken line, which broken line must differ sufficiently from characters printed with the aid of matrix printers to make the marking means machine identifyable, and which frame extends at least partially around the control field concerned.

This achieves the following result:
- the frame serves both as an aid in filling in the control field (lying within said frame) and as an aid for the read-out machine in detecting the location of that control field;
- the frame has a very acceptable unique image structure since it is improbable that the filled-in characters or other image patterns also have the form of a broken line (but the broken line must differ sufficiently from characters which have been printed with the aid of matrix printers);
- a search can progressively be made for the occurrence of the frame in the overall image, namely, for example, firstly for the occurrence of regions in the image having, for example, two dots horizontally, after which said regions are examined more closely in a subsequent step for the occurrence of the number of dots characteristic of the frame; this can likewise be performed for the vertical rows of dots and, finally, for the (characteristic) combination of horizontal and vertical dots which together form the frame;
- because of the small image volume of the frame, it can be readily and rapidly filtered off prior to the interpretation of the characters;
- intersections of the frame by the filled-in characters (for example '6') and overlappings with the filled-in characters (for example '5') do not form a hindrance in filtering out the broken-line frame since the character parts clearly differ, after all, because they are not dotted; thus, not too much and not too little will be filtered out. Only dots in contact with the characters are not filtered out, even though they belong to the frame; the conversion quality is not markedly affected thereby in practice.

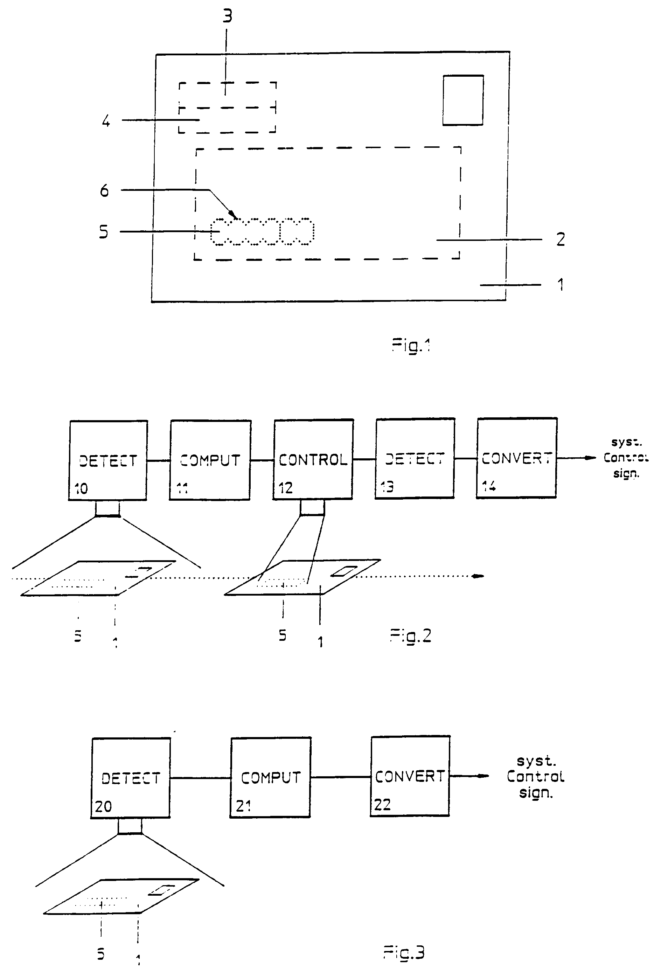

Marking means for the destination field are mentioned in the US patent US-A-4776464: markings (5A) in figure 2 of that document. However, destination field (5) not only contains the characters to be filled in by the sender, and to be found during the scanning process in the postal organisation, but also other - preprinted markings, in the example shown the letters "DFW". These other markings should be disregarded during the scanning process, which process should only result in recognition of the characters of the destination address. The markings (5A) are not in the form of broken lines and furthermore it is obvious from the appearance of these markings that they should contain 7-segment characters. This "7-segment appearance" is the unique image structure which is characteristic of the marking means in US-A-4776464, together with the image structure of target (10).

The French patent FR-A-2134878 describes a return envelope; the return address is taken from the originating envelope. To this end, a slip of paper (2) is torn loose from the envelope sent by the original sender. This slip of paper has an outline (4) which is, e.g., a tear-off line. This means that the outline is formed by lines along which the slip (2) is torn loose, so the outline of the slip itself is formed by perforations (not by dotted or broken lines) and the mark for the position of the slip is (6), which is not defined in the form of broken lines.

German patent application DE-A- 2144697 describes a method for defining the position for postal codes and a way of filling in such codes, but no unique, machine-identifiable image structure of the marking means is presented and there are no detection means for seeking out the marking means by way of their unique, machine-identifiable structure before reading out the contents of the control filed.

As regards the shape of the frame, provision is preferably made that the control fields are divided up into two or more subfields and that, at the separation of mutually adjacent subfields, the frame is provided with frame constrictions which are reentrant towards one another. Said constrictions have the result that the characters do not mutually overlap when filled in, and this promotes a correct, separate reading-out thereof. Despite this, use is preferably made in the conversion process of an algorithm (subprocess) for distinguishing the various characters, as is disclosed, for example, in NL8006371 in the name of the Applicant.

In relation to the detection means, provision is preferably made that the first detection means and the second detection means are formed by an image pick-up device and the first computation means are formed by an image processing device, in which connection, under the control of the system control means,
the image pick-up device picks up an image of the item, or at least a relevant part thereof, and converts it into an image signal,
the image processing device searches through the image signal picked up for the occurrence of one or more of said regions having a unique image signal structure characteristic of the marking means and, on the basis thereof, computes the position of the control fields in the image signal and converts it into a parameter signal,
the image processing device removes from the image signal the image signal pattern characteristic of the marking means,
the image processing device passes the image signals indicated by the parameter signal and corresponding to the control field to said second computation means, the second computation means convert the image signals corresponding to the control field into control signals for the purpose of further controlling the processing system.

To summarise, the invention achieves the result that
- the use of a special 'invisible' colour is superfluous;
- the control field can be printed on the mail item at any desired position;
- the read-out and conversion quality is not adversely affected by the use of a 'not-invisible' frame.

With a view to promoting standardisation of the shape and structure of the marking means (in order to achieve the result that the location of the marking means by machine and reading-out of the control field will be feasible in processing a very large number of items of mail (around 17 million in a 24-hour period in Holland) and does not become needlessly computation-intensive, thereby consuming (too) much time per item, the invention is deemed to extend to the actual items of mail which play a crucial role in the processing system according to the invention and which are provided with said marking means.

### C. EXEMPLARY EMBODIMENTS

Figure 1 shows an example of a letter (envelope) 1 provided with an address field 2, a sender field 3, a status field 4 and (as a component of the address field 2) a postcode field 5. As is customary, said fields 1..4 are not marked; the status field 4 may be used for the indication 'EXPRESS', 'AIRMAIL' and the like. Although the postcode field does not need to have a specified position (as a result of which manufacturers of envelopes and the like do not need to adhere to precise tolerances with regard to the position of the postcode field 5), the postcode field is in fact enclosed by a 'postcode frame' 6, executed as a broken line, as a postcode field marking means. In the processing of letters and the like, in order to enable the read-out equipment designed for the purpose to find the postcode field rapidly and expediently (namely by finding (the characterising image properties of) the postcode frame), said frame 6 does have to meet certain standards, especially with regard to its shape and (dotted) structure.

Figure 2 shows a first exemplary embodiment of a fully automatic 'indexing machine', in which connection it is pointed out that the electronic output signal ('syst. control signal') can be used to drive a bar-code printer (not shown) which prints a bar code corresponding to the postcode on the letter, or, alternatively, to route the letter (by means of a control computer), as is proposed in NL9100300 of the Applicant. In this exemplary embodiment, the postcode field is read out in two steps, namely the selection of the postcode field 6 from all the (possible) fields present on the letter and then the reading-out, interpreting and converting (under the control of the result of the first operation) of the contents of the postcode field, in other words, the postcode itself.

The first procedural step is performed by a first detector (DETECT) 10 and a computer (COMPUT) 11. The detector 10 (for example, a video camera) picks up the image of the entire address side of the letter and transmits the image picked up (in the form of a digital image signal) to the computer 11. The latter analyses the image (signal) for the occurrence therein of image (signal) patterns which are characteristic of the postcode frame 6. The geometrical position of the frame is then computed and converted into a parameter signal (par) which represents said position and is fed to a control device 12. Said control device controls a second detection device (DETECT) 13 (also a video camera) in such a way that said detection device 13 is aimed at the postcode field (situated inside the postcode frame) in order to detect the postcode written, typed or printed therein. With the aid of known techniques which make use of algorithms developed for that purpose, the detected image of the postcode is interpreted and converted into a digital output signal (syst. control signal) which can be used either for applying bar codes to the letter or for further electronic control of the letter routing without applying said bar codes.

Figure 3 shows an improved exemplary embodiment of the invention in which not two, but one detector is used to perform the two procedural steps. The one detector (DETECT) picks up a video image of the entire letter envelope 1 and converts the image thereof into an image signal which is fed to processing means (COMPUT) 21. As the first procedural step, the image signal is examined for the occurrence of the characteristic image signal patterns. This is preferably performed progressively: the signal is first examined for the occurrence of small signal elements which may be characteristics such as small rows corresponding to possible sections of a broken line (with the dot spacing characteristic of the frame). Starting from those regions in the signal, the surroundings of those sections of the image signal are examined to see whether said sections of broken line adjoin one another and then whether the parts of the image (signal) thus selected correspond in combination with one another to the image (signal) which corresponds to the standard post-code frame (for comparison, a comparison image signal of said standard frame is stored in the processing means 21).

Once the position of the post-code field 5 has thus been determined and the information of the frame has thus become superfluous, said information is erased from the image signal, that is to say, all the image information which corresponds to the dotted frame; where said information may not have a dotted nature (because, for example, a '9' has intersected the frame or because a '5' partially coincides with a frame section) the image signal is not erased. As the second procedural step, the image signal which is representative of the region inside the post-code frame and a margin around it (because of said possible 'character intersections') is further analysed, and the characters from which the postcode is formed are interpreted with the aid of known algorithms developed for the purpose (for example, known from NL8006241 in the name of the Applicant) and then converted into digital standard representations thereof, for example ASCII codes which are used in the further routing procedure.

It is pointed out that the post-code frame 6 is provided with constrictions in order to achieve the result that the characters are applied as separately as possible from one another, which assists the interpretation.

It is furthermore pointed out that, in the exemplary embodiments described above, it was assumed for the sake of convenience that only the postcode field 5 has to be automatically converted into a digital code. As has already been indicated above, it is equally possible to arrange for other 'control fields' or parts thereof to be read out and converted provided, of course, all said fields have a frame unique for that field so that no confusion can arise. As an alternative, however, it is also possible to distinguish the nature of each field on the basis of the contents of said fields. Thus, for example, that the contents of a control field are a postcode can be identified by the fact that the latter (in the Dutch situation) is always formed by four figures and two letters. Other fields can also be characterised by their contents, so that the field characterisation on the basis of the shape and/or other image characteristics of the field frame can then be omitted. Another alternative is that the type of control field is derived from the geometrical position such as the one which was computed by the processing means (11 in Figure 2; 21 in Figure 3). In that case, a certain region is specified for each type of control field in which field the latter should occur. In other words, if a control field is found to lie inside region A, the contents are deemed to be the postcode, if the control field lies inside region B, the contents are the house number, and if it lies inside region C, the contents are a handling parameter, for example, 'EXPRESS' or 'Contents of the letter to be converted into an electronic message' (see said NL9001534 of the Applicant).

### D. REFERENCES

NL9100300
NL9001534
NL8006242
NL8006371
US-A-4776464
FR-A-2134878
DE-A-2144697

## Claims

1. Processing system for the processing, such as the routing, of items of mail, such as letters, postcards, postal packages and the like, which are provided with one or more control fields for the accommodation therein of optical control designations destined for the processing in the processing system, such as the destination address or an essential part thereof, such as the combination of the postcode and house number, the characters of which control designations are applied to said item of mail in a colour which lies within a certain optical wavelength range, said items comprising optical marking means for marking the geometrical position of said control fields on said items, which marking means are applied to said items in a colour lying within that same optical wavelength range and which marking means comprise one or more regions having a unique image structure which is characteristic of said marking means, the processing system comprising first detection means for detecting the geometrical position of the marking means and first computation means for computing, on the basis of the detected position of the marking means, the geometrical position of the control fields and supplying a parameter signal corresponding to the computed position, and second detection means for detecting, under the control of the parameter signal supplied by the first computation means, the control designations accommodated in the computed control fields, and second computation means for converting said control designations into control signals for controlling the processing system for the purpose of further processing the items of mail, both the first and the second detection means being sensitive to the optical wavelength range mentioned, characterised in that the first detection means are suitable for detecting the geometrical position of marking means which are only formed by a frame which is executed essentially as a broken line, which broken line must differ sufficiently from characters printed with the aid of matrix printers to make the marking means machine identifyable, and which frame extends at least partially around the control field concerned.

2. Processing system according to Claim 1, characterised in that the control fields are divided up into two or more subfields and in that, at the separation of mutually adjacent subfields, the frame is provided with frame constrictions which are reentrant towards one another.

3. Processing system according to Claims 1 or 2, the first and the second detection means being formed by an image-pick-up device and the first computation means being formed by an image processing device, in which connection, under the control of the system control means, the image-pick-up device picks up an image of the item, or at least a relevant part thereof, and converts it into an image signal, the image processing device searches through the image signal picked up for the occurrence of one or more of said regions having a unique image signal structure characteristic of the marking means and, on the basis thereof, computes the position of the control fields in the image signal and converts it into a parameter signal, characterised in that the image processing device removes from the image signal the image signal pattern characteristic of the marking means, the image processing device passes the image signals indicated by the parameter signal and corresponding to the control field to said second computation means, the second computation means convert the image signals corresponding to the control field into control signals for the purpose of further controlling the processing system.

4. Items of mail, susch as letter envelopes, postcards, postal packages and the like, which are provided with one or more control fields for the application therein of optical control designations destined for the processing in a processing system, such as the destination address or an essential part thereof, such as the combination of postcode and house number, in a colour lying within a certain optical wavelength range, said items comprising optical marking means for marking the geometrical position of those control fields on said items, which marking means are applied to said items in a colour lying within said optical wavelength range, and which marking means comprise one or more regions having a unique image structure which is characteristic of said marking means, characterised in that the marking means are only formed by a frame which is executed essentially as a broken line, which broken line must differ sufficiently from characters printed with the aid of matrix printers to make the marking means machine identifyable, and which frame extends at least partially around the control field concerned.

5. Items of mail according to Claim 4, characterised in that the control fields are divided up into two or more subfields and in that, at the separation of mutually adjacent subfields, the frame is provided with frame constrictions which are reentrant towards one another.

## Patentansprüche

1. Prozessorsystem für die Verarbeitung, wie das Weiterleiten, von Postsendungen, wie Briefe, Postkarten, Postpakete und ähnliches, die mit einem oder mehreren Steuerfeldern versehen sind, um optische Steuerziele aufzunehmen, die dazu vorgesehen sind, in dem Prozessorsystem verarbeitet zu werden, wie die Zieladresse oder ein wesentlicher Teil davon, wie die Kombination der Postleitzahl und der Hausnummer, wobei die Zeichen von den Steuerzielen der besagten Postsendung in einer Farbe, die innerhalb eines bestimmten Wellenlängenbereichs liegt, aufgetragen wird, wobei, um die geometrische Position der besagten Steuerfelder auf diesen besagten Sendungen zu markieren, diese besagten Sendungen Markierungsmittel aufweisen, die auf diesen besagten Sendungen in einer Farbe angewandt wird, die in demselben optischen Wellenlängenbereich liegt, und wobei die Markierungsmittel einen oder mehrere Bereiche umfassen, die eine einzartige Bildstruktur aufweisen, die für das besagte Markierungsmittel charakteristisch ist, wobei das Prozessorsystem erste Erfassungsmittel, um die geometrische Position der Markierungsmittel zu erfassen, und erste Berechnungsmittel, um auf der Basis der erfassten Position der Markierungsmittel die geometrische Position der Steuerfelder zu berechnen und um ein Parametersignal entsprechend der berechneten Position zu liefern, und zweite Erfassungsmittel, um unter der Steuerung des Parametersignals, das durch die ersten Berechnungsmittel zur Verfügung gestellt wird, die Steuerziele zu erfassen, die in den berechneten Steuerfeldern vorgesehen sind, und zweite Berechnungsmittel aufweist, um besagte Steuerziele in Steuersignale umzuwandeln, um das Prozessorsystem zum Zwecke der weiteren Bearbeitung der Postsendungen zu steuern, wobei sowohl die ersten als auch die zweiten Erfassungsmittel für den erwähnten optischen Wellenlängenbereich empfindlich sind, **dadurch gekennzeichnet**, dass die ersten Erfassungsmittel geeignet sind, um die geometrische Position der Markierungsmittel zu erfassen, die nur durch einen Rahmen ausgebildet sind, der im wesentlichen als eine gestrichelte Linie ausgeführt ist, wobei sich die gestrichelte Linie wesentlich gegenüber Zeichen unterscheiden muss, die mit Hilfe von Matrixdruckern gedruckt worden sind, um die Markierungsmittel maschinenidentifizierbar zu machen, und wobei sich der Rahmen zumindest teilweise um das betreffende Steuerfeld herumerstreckt.

2. Prozessorsystem nach Anspruch 1, dadurch gekennzeichnet, dass die Steuerfelder in zwei oder mehr Unterfelder aufgeteilt sind und dass mit der Unterteilung der gegeneinander benachbarten Unterfelder der Rahmen mit Rahmengrenzen geschaffen wird, die zueinander und ineinander übergehend sind.

3. Prozessorsystem nach Anspruch 1 oder Anspruch 2, dadurch gekennzeichnet, dass die ersten Erfassungsmittel und die zweiten Erfassungsmittel durch eine Bildaufnahmevorrichtung gebildet sind und dass die ersten Berechnungsmittel durch eine Bildverarbeitungsvorrichtung gebildet sind, in welchem Zusammenhang unter der Steuerung der Systemsteuermittel die Bildaufnahmevorrichtung ein Bild des Gegenstandes aufnimmt oder zumindest einen relevanten Teil von diesem und diesen in ein Bildsignal umwandelt, dass die Bildverarbeitungseinrichtung das aufgenommene Bildsignal durchsucht, das für das Auftreten von einem oder mehreren der besagten Bereiche aufgenommen worden ist, die eine einzigartige Bildsignalstruktur aufweisen, die für die Markierungsmittel charakteristisch sind, und dass auf der Basis davon die Position der Steuerfelder in dem Bildsignal berechnet und diese in ein Parametersignal zu konvertieren ist, dadurch gekennzeichnet, dass die Bildverarbeitungseinrichtung aus dem Bildsignal das Bildsignalmuster entfernt, das für die Markierungsmittel charakteristisch ist, dass die Bildverarbeitungseinrichtung die Bildsignale, die durch das Parametersignal angezeigt werden und dem Steuerfeld entsprechen, den zweiten Berechnungsmitteln übergibt, und dass die zweiten Berechnungsmittel die Bildsignale, die dem Steuerfeld entsprechen, in Steuersignale zum Zweck der weiteren Steuerung des Prozessorsystems umwandelt.

4. Postsendung, wie Briefumschläge, Postkarten, Postpakete und ähnliches, die mit einem oder mehreren Steuerfeldern, um optische Steuerziele aufzunehmen, die dazu vorgesehen sind, in einem Prozessorsystem verarbeitet zu werden, wie die Zieladresse oder ein wesentlicher Teil davon, wie die Kombination der Postleitzahl und der Hausnummer, in einer Farbe versehen sind, die innerhalb eines bestimmten Wellenlängenbereichs liegt, wobei, um die geometrische Position der besagten Steuerfelder auf diesen besagten Sendungen zu markieren, diese besagten Sendungen Markierungsmittel aufweisen, die auf diesen besagten Sendungen in einer Farbe angewandt wird, die in demselben optischen Wellenlängenbereich liegt, und wobei die Markierungsmittel einen oder mehrere Bereiche umfassen, die eine einzartige Bildstruktur aufweisen, die für das besagte Markierungsmittel charakteristisch ist, **dadurch gekennzeichnet**, dass die Markierungsmittel nur durch einen Rahmen ausgebildet sind, der im wesentlichen als eine gestrichelte Linie ausgeführt ist, wobei sich die gestrichelte Linie wesentlich gegenüber Zeichen unterscheiden muss, die mit Hilfe von Matrixdruckern gedruckt worden sind, um die Markierungsmittel maschinenidentifizierbar zu machen, und wobei sich der Rahmen zumindest teilweise um das betreffende Steuerfeld herumerstreckt.

5. Postsendung nach Anspruch 4, dadurch gekennzeichnet, dass die Steuerfelder in zwei oder mehr Unterfelder aufgeteilt sind und dass mit der Unterteilung der gegeneinander benachbarten Unterfelder der Rahmen mit Rahmengrenzen geschaffen wird, die zueinander und ineinander übergehend sind.

## Revendications

1. Système de traitement destiné à un traitement, tel que l'acheminement, d'articles de courrier, tels que des lettres, des cartes postales, des paquets postaux et analogues, qui possède un ou plusieurs champs de commande pour la disposition de désignations de commande optique destinées au traitement dans le système de traitement, telles que l'adresse de destination ou une partie essentielle de celle-ci, notamment la combinaison d'un code postal et d'un numéro d'habitation, les caractères des désignations de commande étant appliqués sur l'article de courrier avec une couleur comprise dans une certaine plage de longueurs d'onde optiques, les articles comprenant un dispositif de marquage optique destiné à marquer la position géométrique des champs de commande sur les articles, le dispositif de marquage étant appliqué aux articles avec une couleur comprise dans la même plage de longueurs d'onde optiques, et le dispositif de marquage comprenant une ou plusieurs régions ayant une structure unique d'image qui est caractéristique du dispositif de marquage, le système de traitement comprenant un premier dispositif de détection de la position géométrique de dispositif de marquage et un premier dispositif de calcul, sur la base de la position détectée du dispositif de marquage, de la position géométrique des champs de commande, et de transmission d'un signal de paramètre qui correspond à la position calculée, et un second dispositif de détection, sous la commande du signal de paramètre transmis par le premier dispositif de calcul, des désignations de commande placées dans les champs calculés de commande, et un second dispositif de calcul destiné à transformer les désignations de commande en signaux de commande du système de traitement pour assurer un traitement supplémentaire des articles du courrier, le premier et le second dispositif de détection étant tous deux sensibles à la plage de longueurs d'onde optiques indiquée, caractérisé en ce que le premier dispositif de détection convient à la détection de la position géométrique du dispositif de marquage qui est formée uniquement d'un cadre exécuté essentiellement sous forme d'un trait interrompu, le trait interrompu devant suffisamment différer des caractères imprimés à l'aide d'imprimantes matricielles pour que le dispositif de marquage soit identifiable par la machine, le cadre s'étendant au moins partiellement autour du champ de commande concerné.

2. Système de traitement selon la revendication 1, caractérisé en ce que les champs de commande sont divisés en au moins deux sous-champs, et en ce que, à la séparation des sous-champs mutuellement adjacents, le cadre a des rétrécissements de cadre qui sont rentrants l'un vers l'autre.

3. Système de traitement selon la revendication 1 ou 2, dans lequel le premier et le second dispositif de détection sont formés par un dispositif capteur d'image et le premier dispositif de calcul est formé par un dispositif de traitement d'image, et dans ce cas, sous la commande du dispositif de commande du système, le dispositif capteur d'image détecte une image de l'article ou au moins une partie pertinente de celle-ci, et la transforme en un signal d'image, le dispositif de traitement d'image cherche dans le signal d'image détecté l'apparition d'une ou plusieurs desdites régions ayant une structure unique de signal d'image caractéristique du dispositif de marquage et, d'après le résultat, calcule la position des champs de commande dans le signal d'image et la transforme en un signal de paramètre, caractérisé en ce que le dispositif de traitement d'image retire du signal d'image le dessin de signal d'image caractéristique du dispositif de marquage, le dispositif de traitement d'image transmet les signaux d'image indiqués par le signal de paramètre et correspondant aux champs de commande au second dispositif de calcul, et le second dispositif de calcul transforme les signaux d'image correspondant aux champs de commande en signaux de commande pour assurer une commande supplémentaire du système de traitement.

4. Articles de courrier, tels que des enveloppes de lettres, des cartes postales, des paquets postaux et analogues, qui possèdent un ou plusieurs champs de commande pour l'application de désignations de commande optique destinées au traitement dans un système de traitement, telles que l'adresse de destination ou une partie essentielle d'une telle adresse, notamment la combinaison d'un code postal et d'un numéro d'habitation, avec une couleur comprise dans une certaine plage de longueurs d'onde optiques, les articles comprenant un dispositif de marquage optique destiné à marquer la position géométrique de ces champs de commande sur les articles, le dispositif de marquage est appliqué aux articles avec une couleur comprise dans la plage de longueurs d'onde optiques, et le dispositif de marquage comporte une ou plusieurs régions ayant une structure unique d'image qui est caractéristique du dispositif de marquage, caractérisés en ce que le dispositif de marquage est formé uniquement par un cadre exécuté essentiellement sous forme d'un trait interrompu, le trait interrompu devant suffisamment différer des caractères imprimés par des imprimantes matricielles pour que le dispositif de marquage puisse être identifié par la machine, le cadre s'étendant au moins partiellement autour du champ concerné de commande.

5. Articles de courrier selon la revendication 4, caractérisés en ce que les champs de commande sont divisés en au moins deux sous-champs, et en ce que, à la séparation des sous-champs adjacents mutuellement, le cadre possède des rétrécissements de cadre qui sont rentrants l'un vers l'autre.
